# EUROPEAN PATENT SPECIFICATION

(11) **EP 2 859 024 B1**
(45) Date of publication and mention of the grant of the patent: **27.04.2016**
(21) Application number: 13726562.5
(22) Date of filing: 05.06.2013
(51) Int. Cl.: C08F 4/651, C08F 110/06

(54) **CATALYST COMPONENTS FOR THE POLYMERIZATION OF OLEFINS**
KATALYSATORKOMPONENTEN ZUR POLYMERISATION VON OLEFINEN
COMPOSANTS DE CATALYSEUR POUR LA POLYMÉRISATION D'OLÉFINES

(30) Priority: 08.06.2012 EP 12171236; 08.06.2012 US 201261657058 P
(43) Date of publication of application: 15.04.2015
(73) Proprietor: Basell Poliolefine Italia S.r.l., 20127 Milano (IT)
(72) Inventor: MIGNOGNA, Alessandro, I-44122 Ferrara (IT); GUIDOTTI, Simona, I-44122 Ferrara (IT); KASHULIN, Igor, Moscow 117234 (RU); MORINI, Giampiero, I-44122 Ferrara (IT); NIFANT'EV, Ilya, Moscow 119526 (RU); PATER, Joachim T. M., I-44122 Ferrara (IT)
(74) Representative: Giberti, Stefano
(86) International application number: PCT/EP2013/061546
(87) International publication number: WO 2013/182585

(56) References cited:
- US-A- 4 522 930
- US-A- 4 725 656
- DATABASE WPI Week 201351 Thomson Scientific, London, GB; AN 2012-J34051 XP002713402, -& KR 2012 0077684 A (HYOSUNG CORP) 10 July 2012 (2012-07-10)

## Description

The present invention relates to catalyst components for the polymerization of olefins, in particular propylene, comprising a Mg dihalide based support on which are supported Ti atoms and an electron donor selected from a specific class of phenylenediacetate derivatives. The present invention further relates to the catalysts obtained from said components and to their use in processes for the polymerization of olefins in particular propylene.

Catalyst components for the stereospecific polymerization of olefins are widely known in the art. Concerning the polymerization of propylene, the most spread out catalyst family belongs to the Ziegler-Natta category and in general terms it comprises a solid catalyst component, constituted by a magnesium dihalide on which are supported a titanium compound and an internal electron donor compound, used in combination with an Al-alkyl compound. Conventionally however, when a higher crystallinity of the polymer is required, also an external donor (for example an alkoxysilane) is needed in order to obtain higher isotacticity. One of the preferred classes of internal donors is constituted by the esters of phthalic acid, diisobutylphthalate being the most used. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised concerns due to the medical issues associated with their use and some compounds within this class have been classified as source of heavy health problems. Consequently, research activities have been devoted to discover alternative classes of internal donors for use in the preparation of catalyst components for propylene polymerization.

The phenylenediacetate class was mentioned in a generic way in USP 4,725,656 as useful in the PP production without however reporting any concrete example. On the other hand USP 4,522,930, which does not specifically describe the diester class of the present invention, reports the propylene polymerization test of a catalyst including, as electron donor, only one member of the present class namely diisobutyl o-phenylenediacetate. As shown in the experimental part of the present application the results in the polymerization of propylene are not particularly good for this donor.

It has been therefore very surprising to discover that, differently from the specific diisobutyl o-phenylenediacetate, the class of phenylenediacetate derivatives is effective in generating catalysts with good activity and stereospecificity.

It is therefore an object of the present invention a catalyst component for the polymerization of olefins comprising Mg, Ti and an electron donor compound of the following formula (I) 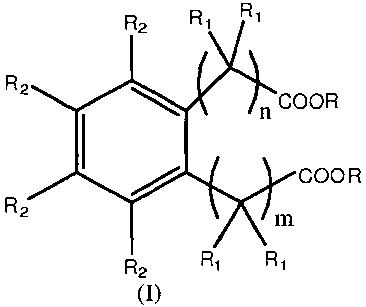 in which the R groups equal to or different from each other, are C₁-C₁₅ hydrocarbon groups, the R₁-R₂ groups, equal to or different from each other, are hydrogen, halogen or C₁-C₁₅ hydrocarbon groups, optionally containing an heteroatom selected from halogen, P, S, N and Si, which can be fused together to form one or more cycles; n and m are integer from 0 to 3 with the proviso that at least one of them is different from 0 and that diisobutyl o-phenylenediacetate is excluded.

Preferably R groups are selected from C₁-C₁₀ hydrocarbon groups and more preferably from linear C₁-C₈ alkyl groups, such as methyl, ethyl and n-butyl.

In a particularly preferred embodiment, when all the R₂ groups are hydrogen, the R groups are independently chosen among linear C₁-C₄ alkyl groups and especially from linear C₁-C₃ alkyl groups.

Preferably, the sum of n+m is 2 and more preferably both n and m are 1.

In a preferred aspect of the present invention the groups R₁ and R₂ are selected from hydrogen and C₁-C₅ alkyl groups. Preferably, they are not simultaneously alkyl groups and more preferably they are simultaneously hydrogen.

The R₂ groups, independently, are preferably selected from hydrogen, halogen or C₁-C₁₀ hydrocarbon groups optionally forming one or more saturated cycles. More preferably, at least one of them is selected from halogen or C₁-C₁₀ alkyl groups. Preferred halogen atoms are Cl, Br and F with Cl being the most preferred. Among C₁-C₁₀ alkyl groups preferred are the C₁-C₅ branched alkyl groups. In one particular embodiment two of the R₂ groups are linked to form a cyclic group condensed with the benzene ring of formula (I). Preferably, the cyclic group condensed with the benzene ring has from 4 to 8 carbon atoms in the chain and one or more of them can be further substituted with additional hydrocarbon groups.

Examples of structures (I) are the following:
butyl 2-(2-(2-ethoxy-2-oxoethyl)phenyl)acetate, , butyl 2-(2-(2-methoxy-2-oxoethyl)phenyl)acetate, butyl 2-(2-(2-oxo-2-propoxyethyl)phenyl)acetate, dibutyl 2,2'-(1,2-phenylene)diacetate, diethyl 2,2'-(1,2-phenylene)diacetate, dimethyl 2,2'-(1,2-phenylene)diacetate, dipropyl 2,2'-(l,2-phenylene)diacetate,, ethyl 2-(2-(2-methoxy-2-oxoethyl)phenyl)acetate, ethyl 2-(2-(2-oxo-2-propoxyethyl)phenyl)acetate,,, methyl 2-(2-(2-oxo-2-propoxyethyl)phenyl)acetate, diethyl 2,2'-(4-(1-phenylethyl)-1,2-phenylene)diacetate, diethyl 2,2'-(4-(2-phenylpropan-2-yl)-1,2-phenylene)diacetate, diethyl 2,2'-(4-(tert-butyl)-1,2-phenylene)diacetate, diethyl 2,2'-(4-butyl-1,2-phenylene)diacetate, diethyl 2,2'-(4-cyclohexyl-1,2-phenylene)diacetate, diethyl 2,2'-(4-cyclopentyl-1,2-phenylene)diacetate, diethyl 2,2'-(4-ethyl-1,2-phenylene)diacetate, dibutyl 2,2'-(1,2-phenylene)diacetate, diethyl 2,2'-(4-isobutyl-1,2-phenylene)diacetate, diethyl 2,2'-(4-isopropyl-1,2-phenylene)diacetate, diethyl 2,2'-(4-methyl-1,2-phenylene)diacetate, diethyl 2,2'-(4-propyl-1,2-phenylene)diacetate , diethyl 2,2'-(4-chloro-1,2-phenylene)diacetate, diethyl 2,2'-(1,2-phenylene)bis(3-methylbutanoate), diethyl 2,2'-(1,2-phenylene)dipropanoate, ethyl 2-(2-(1-ethoxy-1-oxopropan-2-yl)phenyl)-3-methylbutanoate, diethyl 2,2'-(3,4,5,6-tetramethyl-1,2-phenylene)diacetate, diethyl 2,2'-(3,5-di-tert-butyl-1,2-phenylene)diacetate, diethyl 2,2'-(3,5-diisopropyl-1,2-phenylene)diacetate, diethyl 2,2'-(3,5-dimethyl-1,2-phenylene)diacetate, diethyl 2,2'-(4,5-dimethyl-1,2-phenylene)diacetate, diethyl 2,2'-(5,5,8,8-tetramethyl-5,6,7,8-tetrahydronaphthalene-2,3-diyl)diacetate, diethyl 2,2'-(5-(tert-butyl)-3-methyl-1,2-phenylene)diacetate, diethyl 2,2'-(naphthalene-2,3-diyl)diacetate, butyl 2-(3-butoxy-3-oxopropyl)benzoate, ethyl 2-(3-ethoxy-3-oxopropyl)benzoate, methyl 2-(3-methoxy-3-oxopropyl)benzoate, ethyl 2-(2-(ethoxycarbonyl)-3,3-dimethylbutyl)benzoate, ethyl 2-(2-(ethoxycarbonyl)-3-methylbutyl)benzoate, ethyl 2-(2-(ethoxycarbonyl)-4-methylpentyl)benzoate, ethyl 2-(2-(ethoxycarbonyl)butyl)benzoate, ethyl 2-(2-(ethoxycarbonyl)hexyl)benzoate, ethyl 2-(3-ethoxy-2-methyl-3-oxopropyl)benzoate, ethyl 2-(1-(3,4-dichlorophenyl)-3-ethoxy-3-oxopropyl)benzoate, ethyl 2-(1-(3,4-dimethylphenyl)-3-ethoxy-3-oxopropyl)benzoate, ethyl 2-(1-ethoxy-1-oxoheptan-3-yl)benzoate, ethyl 2-(1-ethoxy-1-oxopentan-3-yl)benzoate, ethyl 2-(1-ethoxy-4,4-dimethyl-1-oxopentan-3-yl)benzoate, ethyl 2-(1-ethoxy-4-methyl-1-oxopentan-3-yl)benzoate, ethyl 2-(1-ethoxy-5-methyl-1-oxohexan-3-yl)benzoate, ethyl 2-(3-ethoxy-3-oxo-1-phenylpropyl)benzoate, ethyl 2-(4-ethoxy-4-oxobutan-2-yl)benzoate, ethyl 2-(3-ethoxy-3-oxopropyl)-5-ethylbenzoate, ethyl 2-(3-ethoxy-3-oxopropyl)-5-isobutylbenzoate, ethyl 2-(3-ethoxy-3-oxopropyl)-5-isopropylbenzoate, ethyl 2-(3-ethoxy-3-oxopropyl)-5-methylbenzoate, ethyl 5-(tert-butyl)-2-(3-ethoxy-3-oxopropyl)benzoate, ethyl 5-chloro-2-(3-ethoxy-3-oxopropyl)benzoate, ethyl 2-(3-ethoxy-3-oxopropyl)-4-isopropylbenzoate, ethyl 2-(3-ethoxy-3-oxopropyl)-4-methylbenzoate, ethyl 4-(tert-butyl)-2-(3-ethoxy-3-oxopropyl)benzoate, ethyl 4-chloro-2-(3-ethoxy-3-oxopropyl)benzoate, ethyl 2-(2-(ethoxycarbonyl)cyclohexyl)benzoate, ethyl 3-(3-ethoxy-3-oxopropyl)-2-naphthoate.

As explained above, the catalyst component of the invention comprises, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line. The preferred titanium compounds used in the catalyst component of the present invention are TiCl₄ and TiCl₃; furthermore, also Ti-haloalcoholates of formula Ti(OR)_{q-y}X_{y} can be used, where q is the valence of titanium, y is a number between 1 and q-1, X is halogen and R is a hydrocarbon radical having from 1 to 10 carbon atoms.

The preparation of the solid catalyst component can be carried out according to several methods.

According to one of these methods, the magnesium dichloride in an anhydrous state, the titanium compound and the electron donor compounds are milled together under conditions in which activation of the magnesium dichloride occurs. The so obtained product can be treated one or more times with an excess of TiCl₄ at a temperature between 80 and 135°C. This treatment is followed by washings with hydrocarbon solvents until chloride ions disappeared. According to a further method, the product obtained by co-milling the magnesium chloride in an anhydrous state, the titanium compound and the electron donor compounds are treated with halogenated hydrocarbons such as 1,2-dichloroethane, chlorobenzene, dichloromethane. The treatment is carried out for a time between 1 and 4 hours and at temperature of from 40°C to the boiling point of the halogenated hydrocarbon. Another method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0°C); the mixture is heated up to 80-135°C and kept at this temperature for 0.5-2 hours. The treatment with TiCl₄ can be carried out one or more times. The electron donor compounds can be added in the desired ratios during the treatment with TiCl₄. The preparation of catalyst components in spherical form are described for example in European Patent Applications EP-A-395083, EP-A-553805, EP-A-553806, EPA601525 and WO98/44009.

The solid catalyst components obtained according to the above method show a surface area (by B.E.T. method) generally between 20 and 500 m²/g and preferably between 50 and 400 m²/g, and a total porosity (by B.E.T. method) higher than 0.2 cm³/g, preferably between 0.2 and 0.6 cm³/g. The porosity (Hg method) due to pores with radius up to 10.000Å generally ranges from 0.3 to 1.5 cm³/g, preferably from 0.45 to 1 cm³/g.

The solid catalyst component has an average particle size ranging from 5 to 120 µm and more preferably from 10 to 100 µm.

As mentioned, in any of these preparation methods the desired electron donor compounds can be added as such or, in an alternative way, can be obtained *in situ* by using an appropriate precursor capable of being transformed in the desired electron donor compound by means, for example, of known chemical reactions such as etherification, alkylation, esterification, transesterification. Regardless of the preparation method used, the final amount of the electron donor compound of formula (I) is such that its molar ratio with respect to the Ti atoms is from 0.01 to 3, preferably from 0.2 to 2, more preferably from 0.3-1.5.

The solid catalyst components according to the present invention are converted into catalysts for the polymerization of olefins by reacting them with organoaluminum compounds according to known methods.

In particular, it is an object of the present invention a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

Suitable external electron-donor compounds (iii) include silicon compounds, ethers, esters, amines, heterocyclic compounds and particularly 2,2,6,6-tetramethylpiperidine and ketones. Another class of preferred external donor compounds is that of silicon compounds of formula (R₆)ₐ(R₇)_{b}Si(OR₈)_{c}, where a and b are integers from 0 to 2, c is an integer from 1 to 4 and the sum (a+b+c) is 4; R₆, R₇, and R₈ are alkyl, cycloalkyl or aryl radicals with 1-18 carbon atoms optionally containing heteroatoms. Particularly preferred in the preparation of polybutene-1 are the silicon compounds in which, at least one of R₆ and R₇ is selected from branched alkyl or cycloalkyl groups with 3-10 carbon atoms and R₈ is a C₁-C₁₀ alkyl group, in particular methyl. Examples of such preferred silicon compounds are diisopropyldimethoxysilane, t-butyltrimethoxysilane and thexyltrimethoxysilane and dicyclopentyldimethoxysilane.

The electron donor compound (c) is used in such an amount to give a molar ratio between the organoaluminum compound and said electron donor compound (iii) of from 0.1 to 500, preferably from 1 to 300 and more preferably from 3 to 150.

Therefore, it constitutes a further object of the present invention a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the invention;
(ii) an alkylaluminum compound and,
(iii) optionally an electron-donor compound (external donor).

Homo or copolymerization of propylene with minor amount of ethylene or other olefins of formula CH₂=CHR is preferred. The polymerization process can be carried out according to known techniques for example slurry polymerization using as diluent an inert hydrocarbon solvent, or bulk polymerization using the liquid monomer (for example propylene) as a reaction medium.

Moreover, it may also be possible to carry out the polymerization process in the gas-phase, operating in one or more fluidized or mechanically agitated bed reactors.

The polymerization is generally carried out at temperature of from 20 to 120°C, preferably from 40 to 90°C. In the bulk polymerization the operating pressure is generally between 0.1 and 6 MPa preferably between 1.0 and 4 MPa. The polymerization can be carried out in one or more reactors that can work under same or different reaction conditions such as concentration of molecular weight regulator, monomer concentration, temperature, pressure.

In addition, in order to make the catalyst particularly suitable for the polymerization step, it is possible to prepolymerize said catalyst in a prepolymerization step. Said prepolymerization can be carried out in liquid, (slurry or solution) or in the gas-phase, at temperatures generally lower than 100°C, preferably between 20 and 70°C. The prepolymerization step is carried out with small quantities of monomers for the time which is necessary to obtain the polymer in amounts of between 0.5 and 2000 g per g of solid catalyst component, preferably between 5 and 500 and, more preferably, between 10 and 100 g per g of solid catalyst component. The monomer used in the prepolymerization can be propylene and/or another α-olefin having from 2 to 10 carbon atoms.

The polypropylene produced with the catalyst of the present can be used as such in all the applications for which polypropylene is generally employed. However, as it is known to the experts in this field, and as it can be easily determined by routine tests, it is possible to add further polymer components, additives (such as stabilizers, antioxidants, anticorrosives, nucleating agents, processing aids) and both organic and inorganic fillers which can give specific properties to the products of the invention.

The following examples are given in order to better illustrate the invention.

### CHARACTERIZATIONS

### Determination of Ti

The determination of Ti content in the solid catalyst component has been carried out via inductively coupled plasma emission spectroscopy on "I.C.P Spectrometer ARL Accuris".

The sample was prepared by analytically weighting, in a "fluxy" platinum crucible", 0.1÷0.3 grams of catalyst and 3 grams of lithium metaborate/tetraborate 1/1 mixture. The crucible is placed on a weak Bunsen flame for the burning step and then after addition of some drops of KI solution inserted in a special apparatus "Claisse Fluxy" for the complete burning. The residue is collected with a 5% v/v HNO₃ solution and then the titanium was analyzed via ICP at a wavelength of 368.52 nm.

### Determination of internal donor content

The determination of the content of internal donor in the solid catalytic compound was done through gas chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 0°C under continuous stirring, and the insoluble polymer was then filtered at 0°C. The filtrate was then evaporated in a nitrogen flow at 140°C to reach a constant weight. The content of said xylene-soluble fraction is expressed as a percentage of the original 2.5 grams and then, by difference, the X.I. %.

### Melt flow rate (MFR)

The melt flow rate MIL of the polymer was determined according to ISO 1133 (230°C, 2.16 Kg).

### EXAMPLES

### General procedure for the polymerization of propylene

A 4-liter steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 ml of anhydrous hexane, 0.76 g of AlEt₃, 0.076 g of dicyclopentyldimethoxysilane (D donor) and 0.006÷0.010 g of solid catalyst component. The autoclave was closed; subsequently 2.0 N1 of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### Donor synthesis

The internal electron donors used in the below reported examples were prepared according to the following reaction schemes:

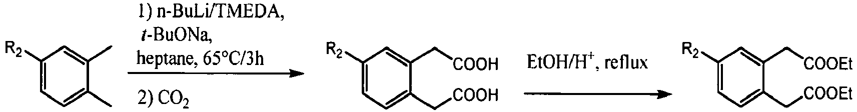

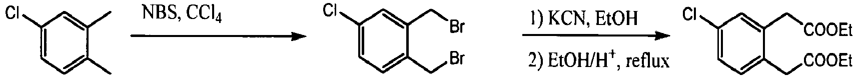

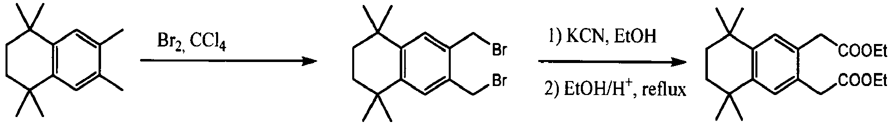

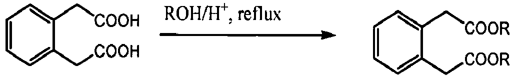

Where
R₂: n-propyl, i-propyl, t-butyl.
R: ethyl, n-propyl, n-butyl, i-butyl t-BuONa: Sodium tert-butoxide
NBS: *N*-Bromosuccinimide

### Procedure for preparation of the spherical adduct

An initial amount of microspheroidal MgCl₂·2.8C₂H₅OH was prepared according to the method described in Example 2 of WO98/44009, but operating on larger scale. The support adduct had a P50 of about 25 micron, and an ethanol content of about 56%wt.

### Examples 1-7 and Comparative example 1

### Preparation of the solid catalyst component.

Into a 500 mL round bottom flask, equipped with mechanical stirrer, cooler and thermometer 250 mL of TiCl₄ were introduced at room temperature under nitrogen atmosphere. After cooling to 0°C, while stirring, the internal donor indicated in Table 1 and 10.0 g of the spherical adduct (prepared as described above) were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times (6 x 100 mL) in temperature gradient down to 60°C and one time (100 mL) at room temperature. The obtained solid was then dried under vacuum and analyzed.

In comparative example 1 the donor addition caused complete dissolution of the spherical adduct which therefore could not settle and could not be recovered in any way.

### Example 8 and Comparative example 2

Into a 500 mL round bottom flask, equipped with mechanical stirrer, cooler and thermometer 250 mL of TiCl₄ were introduced at room temperature under nitrogen atmosphere. After cooling to 0°C, while stirring, 10.0 g of the spherical adduct (prepared as described above) was added into the flask. The temperature was raised to 40°C and maintained for 1 hour. Thereafter, stirring was stopped, the solid product was allowed to settle and the supernatant liquid was siphoned off at 40°C. After the supernatant was removed, additional fresh TiCl₄ was added to reach the initial liquid volume again followed by addition of the internal donor. The amount of charged internal donor was such to charge a Mg/donor molar ratio of 6. The mixture was then heated at 100°C and kept at this temperature for 2 hours. Stirring was stopped again, the solid was allowed to settle and the supernatant liquid was siphoned off. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 mL) in temperature gradient down to 60°C and one time (100 mL) at room temperature. The obtained solid was then dried under vacuum and analyzed.

### Examples 9-11

The solid catalyst component was prepared according to the procedure of examples 1-7 with the difference that the first treatment with TiCl₄ was carried out at 120°C instead of 100°C.

| **Ex .** | **Internal donor** | | **Ti** | **Act.** | **XI** | **MIL** |
|---|---|---|---|---|---|---|
| | **Name** | **%wt** | **wt %** | **kg/g** | **wt %** | **g/10'** |
| 1 | diethyl 2,2'-(1,2-phenylene)diacetate | 15.4 | 2.6 | 32 | 98.5 | 3.3 |
| 2 | diethyl 2,2'-(4-propyl-1,2-phenylene)diacetate | 18.5 | 3.3 | 43 | 98.1 | 2.6 |
| 3 | diethyl 2,2'-(4-isopropyl-1,2-phenylene)diacetate | 16.4 | 3.4 | 40 | 98.5 | 3.4 |
| 4 | diethyl 2,2'-(4-(tert-butyl)-1,2-phenylene)diacetate | 15.5 | 3.3 | 49 | 98.7 | 2.4 |
| 5 | diethyl 2,2'-(4-chloro-1,2-phenylene)diacetate | 18.4 | 2.7 | 41 | 98.8 | 2.7 |
| 6 | diethyl 2,2'-(5,5,8,8-tetramethyl-5,6,7,8-tetrahydrona phthalene-2,3-diyl)diacetate | 19.9 | 3.4 | 50 | 98.3 | 2.5 |
| 7 | dipropyl 2,2'-(1,2-phenylene)diacetate | N.D. | 3.2 | 47 | 98.3 | 2.9 |
| 8 | diethyl 2,2'-(1,2-phenylene)diacetate | 13.3 | 2.5 | 30 | 98.7 | 2.5 |
| 9 | diethyl 2,2'-(1,2-phenylene)diacetate | 12.6 | 2.6 | 43 | 98.5 | 6.8 |
| 10 | dipropyl 2,2'-(1,2-phenylene)diacetate | N.D. | 2.9 | 46 | 98.5 | 2.0 |
| 11 | dibutyl 2,2'-(1,2-phenylene)diacetate | N.D. | 3.2 | 47 | 98.4 | 2.9 |
| C1 | diisobutyl 2,2'-(1,2-phenylene)diacetate | Solid catalyst could not be obtained | | | | |
| C2 | diisobutyl 2,2'-(1,2-phenylene)diacetate | N.D. | 5.4 | 31 | 97.5 | 7.6 |

## Claims

1. A catalyst component for the polymerization of olefins comprising Mg, Ti and an electron donor compound of the following formula (I) 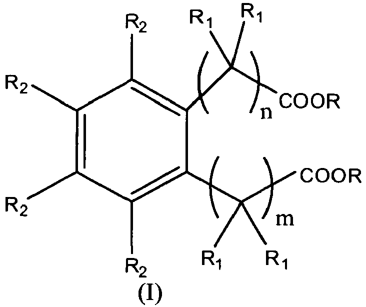 in which the R groups equal to or different from each other, are C₁-C₁₅ hydrocarbon groups, the R₁-R₂ groups, equal to or different from each other, are hydrogen, halogen or C₁-C₁₅ hydrocarbon groups, optionally containing an heteroatom selected from halogen, P, S, N and Si, which can be fused together to form one or more cycles; n and m are integer from 0 to 3 with the proviso that at least one of them is different from 0 and that diisobutyl o-phenylenediacetate is excluded.

2. The catalyst according to claim 1 in which when all the R₂ groups are hydrogen, the R groups are independently chosen among linear C₁-C₄ alkyl groups.

3. The catalyst according to claim 1 in which R groups are selected from C₁-C₈ linear alkyl groups.

4. The catalyst component according to claim 1 in which the sum of n+m is 2.

5. The catalyst component according to claim 4 in which both n and m are 1.

6. The catalyst component according to claim 1 in which R₁ and R₂ are selected from hydrogen and C₁-C₅ alkyl groups.

7. The catalyst component according to claim 1 in which R₁ and R₂ are not simultaneously alkyl groups.

8. The catalyst component according to claim 7 in which R₁ and R₂ are hydrogen.

9. The catalyst component according to claim 1 in which R₂ groups, independently, are selected from hydrogen, halogen or C₁-C₁₀ hydrocarbon groups optionally forming one or more saturated cycles.

10. The catalyst component according to claim 9 in which at least one of R₂ is selected from halogen or C₁-C₁₀ alkyl groups.

11. The catalyst component according to claim 10 in which the halogen is Cl and the alkyl group is a C₁-C₅ branched alkyl group.

12. The catalyst component according to claim 9 in which two of the R₂ groups are linked to form a cyclic group condensed with the benzene ring of formula (I).

13. A catalyst for the polymerization of olefins CH₂=CHR, in which R is hydrogen or a hydrocarbyl radical with 1-12 carbon atoms, comprising the product obtained by contacting:
(i) the solid catalyst component according to claim 1 and
(ii) an alkylaluminum compound and optionally,
(iii) an external electron donor compound.

14. The catalyst according to claim 13 in which the external electron donor is selected silicon compounds of formula (R₆)ₐ(R₇)_{b}Si(OR₈)_{c}, where a and b are integers from 0 to 2, c is an integer from 1 to 4 and the sum (a+b+c) is 4; R₆, R₇, and R₈ are alkyl, cycloalkyl or aryl radicals with 1-18 carbon atoms optionally containing heteroatoms.

15. A process a for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component according to claim 1;
(ii) an alkylaluminum compound and,
(iii) optionally an electron-donor compound (external donor).

## Patentansprüche

1. Katalysatorkomponente zur Polymerisation von Olefinen, umfassend Mg, Ti und eine Elektronendonatorverbindung der folgenden Formel (I) 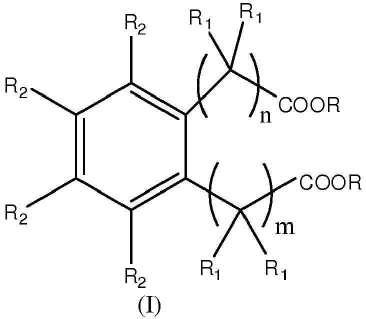 wobei die R-Gruppen, gleich oder verschieden voneinander, C₁- bis C₁₅-Kohlenwasserstoffgruppen sind, die R₁- bis R₂-Gruppen, gleich oder verschieden voneinander, Wasserstoff, Halogen oder C₁- bis C₁₅-Kohlenwasserstoffgruppen sind, gegebenenfalls enthaltend ein Heteroatom, ausgewählt aus Halogen, P, S, N und Si, die zur Bildung von einem Zyklus oder mehr Zyklen miteinander kondensiert sein können; n und m ganze Zahlen von 0 bis 3 sind, mit der Maßgabe, dass mindestens eine von ihnen anders als 0 ist und dass Diisobutyl-o-phenylendiacetat ausgeschlossen ist.

2. Katalysator nach Anspruch 1, wobei, wenn alle R₂-Gruppen Wasserstoff sind, die R-Gruppen unter linearen C₁- bis C₄-Alkylgruppen unabhängig ausgewählt sind.

3. Katalysator nach Anspruch 1, wobei R-Gruppen aus linearen C₁- bis C₈-Alkylgruppen ausgewählt sind.

4. Katalysatorkomponente nach Anspruch 1, wobei die Summe von n+m 2 ist.

5. Katalysatorkomponente nach Anspruch 4, wobei sowohl n als auch m 1 sind.

6. Katalysatorkomponente nach Anspruch 1, wobei R₁ und R₂ aus Wasserstoff und C₁- bis C₅-Alkylgruppen ausgewählt sind.

7. Katalysatorkomponente nach Anspruch 1, wobei R₁ und R₂ nicht gleichzeitig Alkylgruppen sind.

8. Katalysatorkomponente nach Anspruch 7, wobei R₁ und R₂ Wasserstoff sind.

9. Katalysatorkomponente nach Anspruch 1, wobei R₂-Gruppen, unabhängig, aus Wasserstoff, Halogen oder C₁- bis C₁₀-Kohlenwasserstoffgruppen ausgewählt sind, die gegebenenfalls einen oder mehr gesättigte(n) Zyklus/Zyklen bilden.

10. Katalysatorkomponente nach Anspruch 9, wobei mindestens eine von R₂ aus Halogen oder C₁- bis C₁₀-Alkylgruppen ausgewählt ist.

11. Katalysatorkomponente nach Anspruch 10, wobei das Halogen Cl ist und die Alkylgruppe eine verzweigte C₁- bis C₅-Alkylgruppe ist.

12. Katalysatorkomponente nach Anspruch 9, wobei zwei der R₂-Gruppen zur Bildung einer mit dem Benzenring der Formel (I) kondensierten zyklischen Gruppe verknüpft sind.

13. Katalysator zur Polymerisation von Olefinen CH₂=CHR, wobei R Wasserstoff oder ein Hydrocarbylrest mit 1 bis 12 Kohlenstoffatom(en) ist, umfassend das erhaltene Produkt durch Inkontaktbringen:
(i) der festen Katalysatorkomponente nach Anspruch 1 und
(ii) einer Alkylaluminiumverbindung und gegebenenfalls,
(iii) einer externen Elektronendonatorverbindung.

14. Katalysator nach Anspruch 13, wobei der externe Elektronendonator ausgewählt ist aus _{[|1]}Siliciumverbindungen der Formel (R₆)ₐ(R₇)_{b}Si(OR₈)_{c}, wobei a und b ganze Zahlen von 0 bis 2 sind, c eine ganze Zahl von 1 bis 4 ist und die Summe (a+b+c) 4 ist; R₆, R₇ und R₈ Alkyl-, Cycloalkyl- oder Arylreste mit 1 bis 18 Kohlenstoffatom(en) sind, die gegebenenfalls Heteroatome enthalten.

15. Verfahren a zur (Co)polymerisation von Olefinen CH₂=CHR, wobei R Wasserstoff oder ein Hydrocarbylrest mit 1 bis 12 Kohlenstoffatom(en) ist, das in Gegenwart eines Katalysators durchgeführt wird, umfassend das Produkt der Reaktion zwischen:
(i) der festen Katalysatorkomponente nach Anspruch 1;
(ii) einer Alkylaluminiumverbindung und,
(iii) gegebenenfalls einer Elektronendonatorverbindung (externer Donator).

## Revendications

1. Constituant catalytique pour la polymérisation d'oléfines comprenant Mg, Ti et un composé donneur d'électrons de la formule (I) suivante 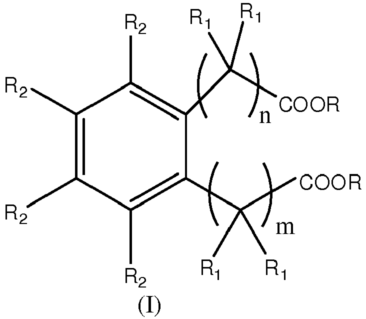 dans laquelle les groupes R, identiques ou différents les uns des autres, représentent des groupes hydrocarbonés en C₁-C₁₅, les groupes R₁-R₂, identiques ou différents les uns des autres, représentent hydrogène, halogène ou des groupes hydrocarbonés en C₁-C₁₅, contenant éventuellement un hétéroatome choisi parmi halogène, P, S, N et Si, qui peuvent être fusionnés ensemble pour former un ou plusieurs cycles ; n et m sont des entiers de 0 à 3, à condition qu'au moins l'un d'entre eux soit différent de 0 et que fo-phénylènediacétate de diisobutyle soit exclu.

2. Catalyseur selon la revendication 1, dans lequel tous les groupes R₂ représentent hydrogène, les groupes R sont choisis, indépendamment, parmi les groupes C₁-C₄-alkyle linéaires.

3. Catalyseur selon la revendication 1, dans lequel les groupes R sont choisis parmi les groupes C₁-C₈-alkyle linéaire.

4. Constituant catalytique selon la revendication 1, dans lequel la somme de n+m vaut 2.

5. Constituant catalytique selon la revendication 4, dans lequel à la fois n et m valent 1.

6. Constituant catalytique selon la revendication 1, dans lequel R₁ et R₂ sont choisis parmi hydrogène et des groupes C₁-C₅-alkyle.

7. Constituant catalytique selon la revendication 1, dans lequel R₁ et R₂ ne représentent pas simultanément des groupes alkyle.

8. Constituant catalytique selon la revendication 7, dans lequel R₁ et R₂ représentent hydrogène.

9. Constituant catalytique selon la revendication 1, dans lequel les groupes R₂, sont choisis, indépendamment, parmi hydrogène, halogène ou des groupes hydrocarbonés en C₁-C₁₀ formant éventuellement un ou plusieurs cycles saturés.

10. Constituant catalytique selon la revendication 9, dans lequel au moins l'un parmi R₂ est choisi parmi halogène ou des groupes C₁-C₁₀-alkyle.

11. Constituant catalytique selon la revendication 10, dans lequel l'halogène est Cl et le groupe alkyle est un groupe C₁-C₅-alkyle ramifié.

12. Constituant catalytique selon la revendication 9, dans lequel deux des groupes R₂ sont liés pour former un groupe cyclique condensé avec le cycle benzène de formule (I).

13. Catalyseur pour la polymérisation d'oléfines CH₂=CHR, dans lequel R représente hydrogène ou un radical hydrocarbyle comprenant 1-12 atomes de carbone, comprenant le produit obtenu par la mise en contact :
(i) du constituant catalytique solide selon la revendication 1 et
(ii) d'un composé d'alkylaluminium et éventuellement
(iii) d'un composé donneur d'électrons externe.

14. Catalyseur selon la revendication 13, dans lequel le composé donneur d'électrons externe est choisi parmi _{[[1]} les composés de silicium de formule (R₆)ₐ(R₇)_{b}Si(OR₈)_{c}, où a et b sont des entiers de 0 à 2, c est un entier de 1 à 4 et la somme (a+b+c) vaut 4 ; R₆, R₇ et R₈ représentent des radicaux alkyle, cycloalkyle ou aryle comprenant 1-18 atomes de carbone, contenant éventuellement des hétéroatomes.

15. Procédé pour la (co)polymérisation d'oléfines CH₂=CHR, dans lesquelles R représente hydrogène ou un radical hydrocarbyle comprenant 1-12 atomes de carbone, effectué en présence d'un catalyseur comprenant le produit de la réaction entre :
(i) le constituant catalytique solide selon la revendication 1 ;
(ii) un composé d'alkylaluminium et
(iii) éventuellement un composé donneur d'électrons (donneur externe).
